# EUROPEAN PATENT SPECIFICATION

(11) **EP 0 921 971 B1**
(45) Date of publication and mention of the grant of the patent: **24.10.2001**
(21) Application number: 97936911.3
(22) Date of filing: 28.08.1997
(51) Int. Cl.: B62D 21/00, F16S 3/06

(54) **METHOD FOR CREATING A BRACKET OR DEVICE ON A BEAM AND BEAM**
VERFAHREN ZUM ANBRINGEN EINER KONSOLE ODER ÄHNLICHES AN EINEN TRÄGER UND TRÄGER
PROCEDE DE CREATION D'UNE CONSOLE OU D'UN DISPOSITIF ANALOGUE SUR UNE POUTRE ET POUTRE

(30) Priority: 30.08.1996 SE 9603143
(43) Date of publication of application: 16.06.1999
(73) Proprietor: Scania CV Aktiebolag (publ), 151 87 Södertälje (SE)
(72) Inventor: BOREHALL, Hans, S-641 47 Katrineholm (SE); LERVAG, Jan, Atle, S-641 50 Katrineholm (SE)
(74) Representative: Waldebäck, Hans Olov
(86) International application number: SE9701424
(87) International publication number: WO9808724

(56) References cited:
- DE-A- 4 109 051
- DE-A- 4 244 216
- DE-B- 1 151 187
- GB-A- 736 518

## Description

The invention relates to a method for creating a bracket for a fastening element on a beam and a beam.

### State of the art.

Fastening of components to a load-bearing beam structure often means that the beam is subject to the action of relatively large forces and that strong and stable fastening is therefore necessary. This often occurs in heavy vehicles, e.g. buses, in which various components have to be fastened to beams which form part of the load-bearing body structure of the vehicle.

On I-section or U-section beams it is relatively easy to create brackets by making holes in the beams into which bolts are pressed or screwed firmly, sometimes using locknuts.

On hollow beams, usually rectangular beams, it is more difficult to create simple brackets because these beams have relatively small wall thicknesses which do not tolerate large clamping forces. Subjecting such a beam to large clamping forces may well cause the whole beam to collapse. One way of arranging a bracket on such a beam is to arrange a clip around the beam so that it forms the actual bracket, but if the clip is tightened with too much force it may well constrict the whole beam at the bracket point. A further disadvantage is that it is difficult to arrange the bracket at a predetermined position without resorting to special arrangements for the purpose.

Another commonly used method is to drill two mutually concentric holes in opposite sides of the beam, followed by inserting a sleeve through the holes and welding it firmly to each to both walls of the beam. A bolt or the like can then be pressed or screwed in firmly, sometimes using locknuts. Here again there is unfavourable transmission of forces to the rectangular beam, since bending stresses may well occur in the walls of the beam in a region where they are relatively weak.

That means it is known a method for creating a bracket for a fastening element (as a bolt) on a beam incorporating walls which surround an internal space whereby at least one wall has a substantially planar outside surface, comprising a first step to remove part of the beam so that an aperture to the internal space is formed, a second step to place a sleeve in the aperture so that the latter lies perpendicular to the longitudinal direction of the beam, and a third step to fasten the sleeve to the beam by welding, after which the fastening element may be fixed in the sleeve.

From the prior art it is also known a beam incorporating walls which surround an internal space whereby at least one wall has a substantially planar outside surface, comprising a sleeve engaging an aperture so that the central axis of the sleeve is perpendicular to the longitudinal direction of the beam, the sleeve is fastened to the beam by welding and the sleeve constitutes a bracket for a fastening element, preferably a bolt.

An alternative solution is to weld the sleeve at only one end and let the other end abut against the inside of the opposite wall of the beam, but this may lead to manufacturing problems, since it is difficult to check that the sleeve has not been inserted obliquely or has been inserted not far enough to abut against the opposite wall, which may lead to still less favourable fastenings from the force transmission point of view.

Such force transmission is of course undesirable in applications where the connection is subject to large loads, as in fastenings of heavy components in an environment subject to vibration, e.g. in heavy vehicles.

### Objects of the invention.

One object of the invention is to improve the prior art method for creating a bracket for a fastening element on a beam, which method provides a relatively inexpensive, easy and safe way of creating a bracket which is favourable from the force transmission point of view, is stable and lacks the abovementioned disadvantages. The bracket has also to be capable of being positioned at a predetermined location on the beam.

Accordingly the method according to the invention comprises the features indicated in the independent claim 1. Removing part of the beam and welding a sleeve firmly into the resulting recess makes it possible for a bolt or similar fastening element to be arranged with its central axis in the surface plane of the beam. This means that the walls of the beam can absorb the forces from the bolt without risk of the beam collapsing.

Patent claims 2-4 indicate advantageous detailed embodiments of the method including inter alia the use of a rectangular beam and methods for arranging a number of brackets on the same beam.

Another object of the invention is to create a beam, which constitutes a bracket with the characteristics and advantages mentioned above.

Accordingly the beam according to the invention is defined by the features indicated in the independent claim 5.

Patent claims 6-10 indicate advantageous detailed embodiments including inter alia the use of a rectangular beam and beams with a number of brackets on the same beam.

Further features and advantages of the invention are indicated by the accompanying description of an embodiment with reference to the attached drawings.

### List of drawings

Figure 1 shows a cross-section I-I according to Figure 2 of a rectangular beam.
Figure 2 shows a side view of the beam according to Figure 1.
Figure 3 shows a view from above of the beam according to Figure 1.
Figure 4 shows a cross-section IV-IV according to Figure 5 of the beam after the bracket has been arranged.
Figure 5 shows a view according to Figure 2 after the bracket has been arranged.
Figure 6 shows a view according to Figure 3 after the bracket has been arranged.

### Description of an embodiment.

The beam depicted in the drawings may for example form part of a load-bearing frame or body for a heavy vehicle, e.g. a bus, in which it is desired to fasten components by bolted connections. The beam is a rectangular beam 1 which incorporates four walls 2-5 which surround an internal space 6. Each wall 2-5 has substantially planar outside surfaces 7-10 and inside surfaces.

The beam has to be provided with brackets for bolts. The method according to the invention for providing the beam 1 with such brackets is described below.
The drawings show a section of the beam incorporating two brackets.

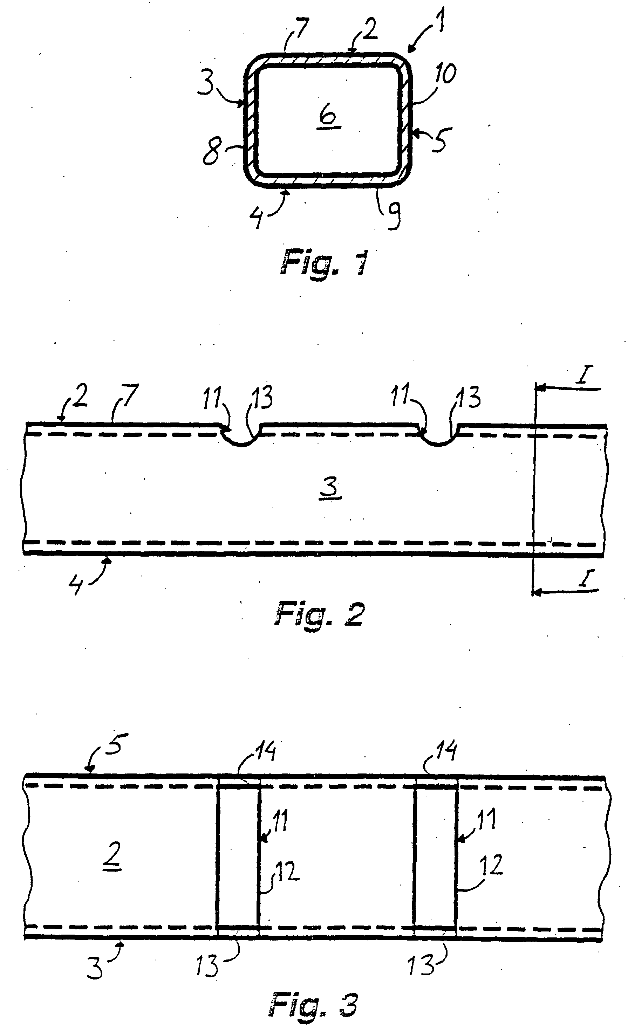

The first step is to remove, preferably by milling or some other cutting form of machining, a fragment of the beam 1 so as to form an aperture 11 to the internal space 6. The aperture 11 consists of a transverse section 12 across the beam 1, i.e. across the whole width of a first wall 2
(see Fig. 3). The fragment cut away also includes parts of the adjacent walls 3,5 so that semicircular recesses 13,14 are formed in the latter (see Fig. 2).

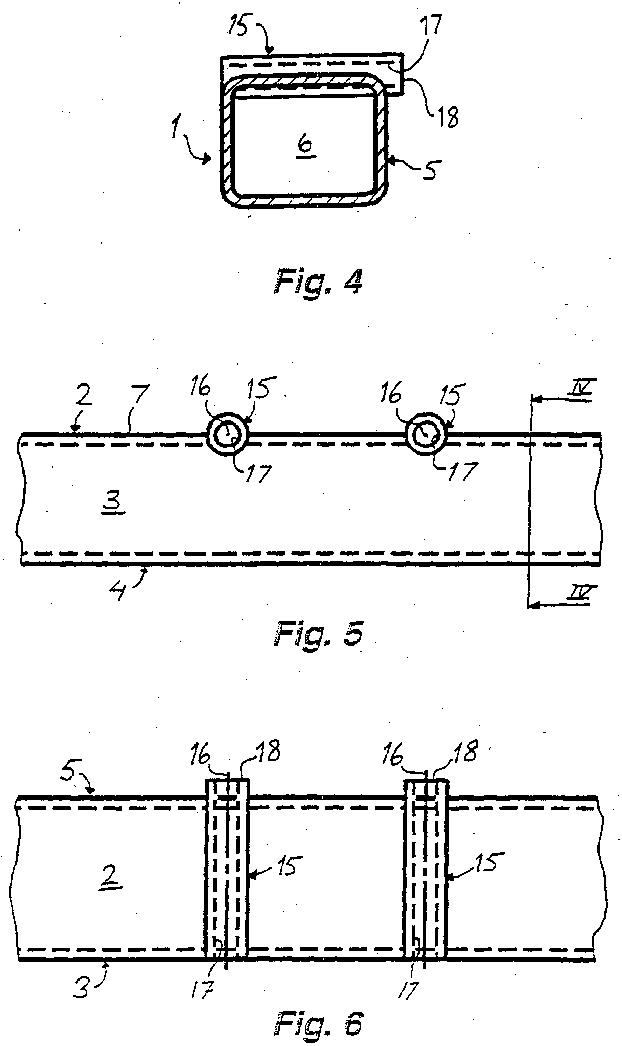

The next step is to apply a sleeve 15, preferably cylindrical with a hole 17 running through it, so that the aperture 11 is completely covered (see Figs. 5,6). The sleeve 15 is placed so that its central axis 16 lies in the same plane as the outside surface 7 of the first wall 2. The sleeve 15 is then welded firmly to the beam 1. It is advantageous for the material thickness of the sleeve 15 to be of the same order of magnitude as that of the wall 2.

A bolt can then be fixed in the hole 17 of the sleeve 15. It is advantageous for the component which is to be fastened to the beam to be provided with a corresponding hole running through it. This will make it possible to use an ordinary bolted connection with locknuts. This means that relatively long bolts can be used, thereby allowing the bolted connection to be tightened with corresponding large clamping forces. In alternative embodiments the hole 17 may be threaded inside or a locknut may be used, and further possible alternatives are to use contact adhesive or press fitting. The sleeve 15 may also be of some other shape.

If it is desired to fix the component at a predetermined distance from the beam 1, the sleeve 15 may be made longer than the width of the beam 1 (see Figs. 4,6) where the component is intended to be fastened against the end plane 18 of the sleeve. This is advantageous for ensuring that the component abuts only against the sleeve 15 and not against the wall 5 of the beam, thereby ensuring that the adjacent walls 2,4 are not subject to the action of any unfavourable forces which might constrict the beam.

As the longitudinal axis of the fastening element is thus arranged in the same plane as the outside surface 7 of the wall 2, no bending stresses are imposed on the adjacent walls 3,5 which are perpendicular to the longitudinal axis of the fastening element, so the result is a strong and robust solution.

The invention also makes it possible to use threaded connections at certain fastening points where welded connections were used previously. This is advantageous in applications where components for a product are shipped to another location for final assembly, since the assembly of a threaded connection requires no special comprehensive training or complicated assembly equipment in the form of welding units.
The beam need not be of the rectangular type but may of a number of different shapes. It also need not be uniform in the longitudinal direction, and hot all the walls need be planar. What is essential to being able to achieve a favourable force configuration is that the bracket is arranged on a relatively planar wall or section of wall. Two or more brackets may of course be arranged on the same beam and on different walls. If two or more walls are used, it is advantageous for them to be in parallel planes, e.g. on opposite sides of a rectangular beam, otherwise there will be forces in different directions resulting in a less favourable force configuration. Brackets may with advantage be arranged on opposite sides at the same location in the longitudinal direction of the beam. On beams with two or more brackets it is advantageous to create all the apertures first and only thereafter to fasten the sleeves. Here too, two or more brackets for the same component should be arranged so that the respective sleeve end planes all lie in the same plane so as to form one fastening plane for the component.

A beam provided with brackets by the method described above forms the device according to the invention, whose features are indicated in the claims.

## Claims

1. Method for creating a bracket for a fastening element, preferably a bolt, on a beam (1) incorporating walls (2-5) which surround an internal space (6) whereby at least one wall (2) has a substantially planar outside surface (7), the method comprising the following steps: a first step is to remove part of the beam so that an aperture (11) to the internal space (6) is formed along the whole width of the planar outside surface (7), a second step is to place a sleeve (15) in the aperture (11) so that the latter is covered and the central axis (16) of the sleeve (15) lies in substantially the same plane as the planar outside surface (7) and perpendicular to the longitudinal direction of the beam, and a third step is to fasten the sleeve (15) to the beam (1) by welding, after which the fastening element may be fixed in the sleeve (15).

2. Method according to claim 1 whereby the beam (1) has a substantially rectangular cross-section and four walls (2-5) with substantially planar outside surfaces (7-10), ***characterised* in that** the first step is to remove part of the beam so that the aperture (11) consists not only of a transverse section (12) across the whole width of a first wall (2) but also of adjoining semicircular recesses (13,14) in the adjacent walls (3,5).

3. Method according to either of claims 1 and 2, ***characterised* in that** the removal is by a cutting form of machining, preferably milling.

4. Method according to any one of claims 1-3 whereby two or more brackets are arranged on one or more walls (2-5) with planar outside surfaces (7-10), ***characterised* in that** the first step is to remove two or more parts of the beam (1) so that apertures (11) to the internal space (6) are formed across the whole width of one or more planar outside surfaces (7-10), preferably in parallel planes (7,9 or 8,10), the second step is to place each sleeve (15) in the respective aperture (11) and the third step is to fasten the respective sleeve (15) to the beam (1) by welding.

5. A beam (1) incorporating walls (2-5) which surround an internal space (6) whereby at least one wall (2) has a substantially planar outside surface (7), comprising a sleeve (15) covering an aperture (11) across the width of the planar outside surface (7) so that the central axis (16) of the sleeve (15) lies in substantially the same plane as the planar outside surface (7) and perpendicular to the longitudinal direction of the beam, the sleeve (15) is fastened to the beam (1) by welding and the sleeve (15) constitutes a bracket for a fastening element, preferably a bolt.

6. A beam according to claim 5 whereby the beam (1) has a substantially rectangular cross-section and four walls (2-5) with substantially planar outside surfaces (7-10), ***characterised* in that** the sleeve (15) covers the aperture (11) which consists not only of a transverse section (12) across the whole width of a first wall (2) but also of adjoining semicircular recesses (13,14) in the adjacent walls (3,5).

7. A beam according to claim 6, ***characterised* in that** the sleeve (15) has substantially the same material thickness as the first wall (2).

8. A beam according to any one of claims 6-7, ***characterised* in that** the sleeve (15) has a longer axial extent than the width of the first wall (2).

9. A beam according to any one of claims 5-8, ***characterised* in that** the sleeve (15) is elongated and substantially cylindrical with a hole (17) running through it to accommodate the fastening element.

10. A beam according to any one of claims 5-9, ***characterised* in that** two or more sleeves (15) are arranged in apertures (11) with their respective central axes (16) in the same plane as the, outside surfaces (7-10) of one or more walls (2-5), which outside surfaces preferably lie in parallel planes (7,9 or 8,10).

## Patentansprüche

1. Verfahren zum Ausbilden einer Halterung für ein Befestigungselement, vorzugsweise eine Schraube, an einem Träger (1) mit Wänden (2 - 5), welche einen Innenraum (6) umgeben, wobei zumindest eine Wand (2) eine im wesentlichen ebene Außenfläche (7) aufweist, wobei das Verfahren die folgenden Schritte umfaßt:
als erster Schritt wird ein Teil des Trägers entfernt, so daß eine Öffnung (11) zum Innenraum (6) entlang der gesamten Breite der ebenen Außenfläche (7) geschaffen wird, als zweiter Schritt wird eine Hülse (15) in der Öffnung (11) angeordnet, so daß die letztgenannte bedeckt ist und die Mittelachse (16) der Hülse (15) in im wesentlichen der gleichen Ebene wie die ebene Außenfläche (7) und senkrecht zur Längsrichtung des Trägers liegt, und als dritter Schritt wird die Hülse (15) am Träger (1) durch Schweißen befestigt, wonach das Befestigungselement in der Hülse (15) befestigt werden kann.

2. Verfahren nach Anspruch 1, wobei der Träger (1) einen im wesentlichen rechtwinkeligen Querschnitt und vier Wände (2 - 5) mit im wesentlichen ebenen Außenflächen (7 - 10) aufweist, **dadurch *gekennzeichnet,* daß** als erster.Schritt ein Teil des Trägers so entfernt wird, daß die Öffnung (11) nicht nur aus einem transversalen Segment (12) über die gesamte Breite einer ersten Wand (2), sondern auch aus angrenzenden halbkreisförmigen Aussparungen (13, 14) in den benachbarten Wänden (3, 5) besteht.

3. Verfahren nach einem der Ansprüche 1 und 2, **dadurch gekennzeichnet, daß** das Entfernen durch schneidendes Zerspanen, vorzugsweise Fräsen, erfolgt.

4. Verfahren nach einem der Ansprüche 1 - 3, wobei zwei oder mehr Halterungen auf einer oder mehr Wänden (2 - 5) mit ebenen Außenflächen (7 - 10) angeordnet werden, **dadurch ge*kennzeichnet*, daß** als erster Schritt zwei oder mehr Teile des Trägers (1) so entfernt werden, daß Öffnungen (11) zum Innenraum (6) über die gesamte Breite einer oder mehrerer ebener Außenflächen (7 - 10) vorzugsweise in parallelen Ebenen (7, 9 oder 8, 10) geschaffen werden, als zweiter Schritt je eine Hülse (15) in der jeweiligen Öffnung (11) angeordnet wird, und als dritter Schritt die jeweilige Hülse (15) mit dem Träger (1) durch Schweißen verbunden wird.

5. Träger (1) mit Wänden (2 - 5), die einen Innenraum (6) umgeben, wobei zumindest eine Wand (2) eine im wesentlichen ebene Außenfläche (7) aufweist, mit einer Hülse (15), die eine Öffnung (11) über die Breite der ebenen Außenfläche (7) bedeckt, so daß die Mittelachse (16) der Hülse (15) in im wesentlichen der gleichen Ebene wie die ebene Außenfläche (7) und senkrecht zur Längsrichtung des Trägers liegt, die Hülse (15) am Träger (1) durch Schweißen befestigt ist und die Hülse (15) eine Halterung für ein Befestigungselement, vorzugsweise eine Schraube, bildet.

6. Träger nach Anspruch 5, wobei der Träger (1) einen im wesentlichen rechtwinkeligen Querschnitt und vier Wände (2 - 5) mit im wesentlichen ebenen Außenflächen (7 - 10) aufweist, **dadurch *gekennzeichnet,* daß** die Hülse (15) die Öffnung (11) bedeckt, welche nicht nur aus einem transversalen Segment (12) über die gesamte Breite einer ersten Wand (2), sondern auch aus angrenzenden halbkreisförmigen Aussparungen (13, 14) in den benachbarten Wänden (3, 5) besteht.

7. Träger nach Anspruch 6, ***dadurch gekennzeichnet,* daß** die Hülse (15) im wesentlichen die gleiche Materialdicke wie die erste Wand (2) aufweist.

8. Träger nach einem der Ansprüche 6 - 7, ***dadurch gekennzeichnet*, *daß*** die Hülse (15) eine längere axiale Ausdehnung als die Breite der ersten Wand (2) hat.

9. Träger nach einem der Ansprüche 5 - 8, **dadurch *gekennzeichnet,* daß** die Hülse (15) langgestreckt und im wesentlichen zylindrisch ist mit einem durchgehenden Loch (17), um das Befestigungselement aufzunehmen.

10. Träger nach einem der Ansprüche 5 - 9, **dadurch *gekennzeichnet*, daß** zwei oder mehr Hülsen (15) in Öffnungen (11) mit ihren jeweiligen Mittelachsen (16) in der gleichen Ebene wie die Außenflächen (7 - 10) einer oder mehrerer Wände (2 - 5) angeordnet sind, welche Außenflächen vorzugsweise in parallelen Ebenen (7, 9 oder 8, 10) liegen.

## Revendications

1. Procédé de création d'un support pour un élément de fixation, de préférence un boulon, sur un longeron (1) incorporant des parois (2 à 5) qui entourent un espace interne (6) de sorte qu'au moins une paroi (2) a une surface extérieure sensiblement plane (7), le procédé comportant les étapes suivantes : une première étape consiste à enlever une partie du longeron de telle sorte qu'une ouverture (11) sur l'espace interne (6) est formée sur toute la largeur de la surface extérieure plane (7), une deuxième étape consiste à placer un manchon (15) dans l'ouverture (11) de telle sorte que cette dernière est recouverte et l'axe central (16) du manchon (15) s'étend sensiblement dans le même plan que la surface extérieure plane (7) et perpendiculairement à la direction longitudinale du longeron, et une troisième étape consiste à fixer le manchon (15) sur le longeron (1) par soudage, après quoi l'élément de fixation peut être fixé dans le manchon (15).

2. Procédé selon la revendication 1, où le longeron (1) a une section sensiblement rectangulaire et quatre parois (2 à 5) avec des surfaces extérieures sensiblement planes (7), **caractérisé en ce que** la première étape consiste à enlever une partie du longeron de telle sorte que l'ouverture (11) se compose non seulement d'une section transversale (12) sur toute la largeur d'une première paroi (2) mais également de renfoncements semi-circulaires adjacents (13, 14) dans les parois adjacentes (3, 5).

3. Procédé selon l'une des revendications 1 et 2, **caractérisé en ce que** l'enlèvement se fait par une forme d'usinage à découpage, de préférence un fraisage.

4. Procédé selon l'une quelconque des revendications 1 à 3, où deux supports ou plus sont disposés sur une ou plusieurs parois (2 à 5) avec des surfaces extérieures planes (7), **caractérisé en ce que** la première étape consiste à enlever deux parties ou plus du longeron (1) de telle sorte que des ouvertures (11) sur l'espace interne (6) sont formées sur toute la largeur d'une ou plusieurs surfaces extérieures planes (7), de préférence dans des plans parallèles (7, 9 ou 8, 10), la deuxième étape consiste à placer chaque manchon (15) dans l'ouverture respective (11) et la troisième étape consiste à fixer le manchon (15) respectif sur le longeron (1) par soudage.

5. Longeron (1) incorporant des parois (2 à 5) qui entourent un espace interne (6) de sorte qu'au moins une paroi (2) a une surface extérieure sensiblement plane (7), comportant un manchon (15) recouvrant une ouverture (11) sur la largeur de la surface extérieure plane (7) de telle sorte que l'axe central (16) du manchon (15) s'étend sensiblement dans le même plan que la surface extérieure plane (7) et perpendiculairement à la direction longitudinale du longeron, le manchon (15) est fixé sur le longeron (1) par soudage et le manchon (15) constitue un support pour un élément de fixation, de préférence un boulon.

6. Longeron selon la revendication 5, où le longeron (1) a une section sensiblement rectangulaire et quatre parois (2 à 5) avec des surfaces extérieures sensiblement planes (7 à 10), **caractérisé en ce que** le manchon (15) recouvre l'ouverture (11) qui se compose non seulement d'une section transversale (12) sur toute la largeur d'une première paroi (2) mais également de renfoncements semi-circulaires adjacents (13, 14) dans les parois adjacentes (3, 5).

7. Longeron selon la revendication 6, **caractérisé en ce que** le manchon (15) a sensiblement la même épaisseur de matière que la première paroi (12).

8. Longeron selon l'une quelconque des revendications 6 et 7, **caractérisé en ce que** le manchon (15) a une extension axiale plus longue que la largeur de la première paroi (2).

9. Longeron selon l'une quelconque des revendications 5 à 8, **caractérisé en ce que** le manchon (15) est allongé et sensiblement cylindrique avec un trou (17) le traversant afin de recevoir l'élément de fixation.

10. Longeron selon l'une quelconque des revendications 5 à 9, **caractérisé en ce que** deux ou plusieurs manchons (15) sont disposés dans des ouvertures (11) avec leurs axes centraux respectifs (16) dans le même plan que les surfaces extérieures (7) d'une ou plusieurs parois (2 à 5), lesquelles surfaces extérieures s'étendent de préférence dans des plans parallèles (7, 9 ou 8, 10).
